# EUROPEAN PATENT APPLICATION

(11) **EP 4 850 962 A1**
(43) Date of publication of application: **09.12.2026**
(21) Application number: 25809553.8
(22) Date of filing: 07.05.2025
(51) Int. Cl.: B60L 3/08, B60K 31/00

(54) **MILEAGE-BASED VEHICLE CONTROL METHOD AND APPARATUS, DEVICE, AND VEHICLE**

(30) Priority: 10.05.2024 CN 202410577984
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: LI, Chuanhai, Hangzhou Bay New District Ningbo, Zhejiang 315336 (CN); WU, Jidong, Hangzhou Bay New District Ningbo, Zhejiang 315336 (CN); WU, Xiangke, Hangzhou Bay New District Ningbo, Zhejiang 315336 (CN)
(74) Representative: Boult Wade Tennant LLP
(86) International application number: PCT/CN2025/093196
(87) International publication number: WO 2025/232792

(57) **Abstract**

The present application provides a mileage-based vehicle control method and apparatus, a device and a vehicle, and relates to the technical field of automobiles. The method includes: determining whether all available driving mileage of a vehicle has been consumed when the vehicle starts a driving cycle; and if it is determined that all available driving mileage of the vehicle has been consumed, controlling the vehicle to travel at a vehicle speed lower than a preset vehicle speed in a current driving cycle. With the above method, vehicle control can be achieved based on mileage. After all available driving mileage is consumed, the vehicle can continue traveling at a vehicle speed below the preset vehicle speed, thereby avoiding a situation of vehicle startup failure or traveling failure and improving user experience.

## Description

The present application claims priority to Chinese patent application No. 202410577984.3, filed with China National Intellectual Property Administration on May 10, 2024, and entitled "MILEAGE-BASED VEHICLE CONTROL METHOD AND APPARATUS, DEVICE, AND VEHICLE", which is hereby incorporated by reference in its entirety.

### TECHNICAL FIELD

The present application relates to the technical field of automobiles, and in particular, to a mileage-based vehicle control method and apparatus, a device and a vehicle.

### BACKGROUND

With the development of new energy vehicles, requirements for battery performance are continuously increasing. Vehicle manufacturers need to continuously upgrade and reconstruct batteries to meet user demands, which raises battery costs and vehicle manufacturing costs, thereby further increasing users' vehicle purchase burdens.

In the related art, vehicle-battery separation can be adopted to reduce the users' vehicle purchase burdens. Users do not need to purchase batteries when buying new energy vehicles and only need to rent the batteries of the new energy vehicles. However, in the above manner, batteries will be locked upon expiration of a battery rental term, thereby rendering users unable to use the vehicles and resulting in poor user experience.

### SUMMARY

The present application provides a mileage-based vehicle control method and apparatus, a device and a vehicle to solve a problem of poor user experience caused by users' inability to use the vehicle due to battery locking.

In a first aspect, the present application provides a mileage-based vehicle control method, applied to a vehicle control unit (VCU) of a vehicle, and including:
determining whether all available driving mileage of the vehicle has been consumed when the vehicle starts a driving cycle; and
if it is determined that all available driving mileage of the vehicle has been consumed, controlling the vehicle to travel at a vehicle speed lower than a preset vehicle speed in a current driving cycle.

In a possible implementation, the method further includes:
sending first indication information to a digital cockpit head unit (DHU) of the vehicle, where the first indication information is used to indicate full consumption of available driving mileage of the vehicle in a previous driving cycle and/or overdrawn driving mileage of the vehicle.

In a possible implementation, the available driving mileage of the vehicle includes:
user-purchased driving mileage, and free available mileage corresponding to a battery charge level greater than a preset charge level; or
unexpired user-purchased driving mileage, and the free available mileage corresponding to the battery charge level greater than the preset charge level.

In a possible implementation, the method further includes:
receiving configuration information issued by a cloud server, where the configuration information includes user-purchased mileage information; and
updating the available driving mileage of the vehicle according to the configuration information, and sending second indication information to a digital cockpit head unit (DHU), where the second indication information is used to indicate updated available driving mileage.

In a possible implementation, the method further includes:
sending third indication information to a digital cockpit head unit (DHU) of the vehicle, where the third indication information is used to indicate that speed limiting has been implemented on the vehicle, and to indicate the DHU to perform restriction control on at least one of an entertainment function, a seat heating function or a steering wheel heating function.

In a possible implementation, the method further includes:
if it is determined that not all available driving mileage of the vehicle has been consumed, sending fourth indication information to a digital cockpit head unit (DHU) according to a preset period in a current driving cycle based on the available driving mileage and mileage traveled in the current driving cycle, where the fourth indication information is used to indicate remaining available driving mileage or overdrawn mileage.

In a second aspect, the present application provides a mileage-based vehicle control method, applied to a digital cockpit head unit (DHU) of a vehicle, and including:
receiving indication information sent by a vehicle control unit (VCU) of the vehicle, where the indication information is used to indicate information related to available driving mileage of the vehicle; and
displaying prompt information on a graphical user interface according to the indication information.

In a possible implementation, the indication information includes first indication information, and the first indication information is used to indicate full consumption of available driving mileage of the vehicle in a previous driving cycle and/or overdrawn driving mileage of the vehicle; and
correspondingly, the displaying the prompt information on the graphical user interface according to the indication information, includes:
displaying a speed limiting reminder and at least one of full consumption of available driving mileage, overdrawn driving mileage or driving mileage purchase information on the graphical user interface according to the first indication information, where the speed limiting reminder is used to indicate that the vehicle has entered a speed-limited driving state.

In a possible implementation, the indication information includes second indication information, and the second indication information is used to indicate updated available driving mileage; and
correspondingly, the displaying the prompt information on the graphical user interface according to the indication information, includes:
displaying the updated available driving mileage on the graphical user interface according to the second indication information.

In a possible implementation, the indication information includes third indication information, and the third indication information is used to indicate that speed limiting has been implemented on the vehicle, and to indicate the DHU to perform restriction control on at least one of an entertainment function, a seat heating function or a steering wheel heating function;
the method further includes:
performing restriction processing on at least one of the entertainment function, the seat heating function or the steering wheel heating function according to the third indication information; and
correspondingly, the displaying the prompt information on the graphical user interface according to the indication information, includes:
   displaying that speed limiting has been implemented on the vehicle, and at least one of the entertainment function, the seat heating function or the steering wheel heating function has been restricted on the graphical user interface according to the third indication information.

In a possible implementation, the indication information includes fourth indication information, and the fourth indication information is used to indicate remaining available driving mileage in a current driving cycle or overdrawn mileage; and
correspondingly, the displaying the prompt information on the graphical user interface according to the indication information, includes:
if the remaining available driving mileage in the current driving cycle in the fourth indication information is less than preset mileage, displaying the remaining available driving mileage and driving mileage purchase information on the graphical user interface;
if the remaining available driving mileage in the current driving cycle in the fourth indication information is greater than or equal to the preset mileage, displaying the remaining available driving mileage on the graphical user interface; and
if the fourth indication information includes the overdrawn mileage, displaying the overdrawn mileage and the driving mileage purchase information on the graphical user interface.

In a third aspect, the present application provides a mileage-based vehicle control apparatus, including:
a processing module, configured to determine whether all available driving mileage of the vehicle has been consumed when the vehicle starts a driving cycle; and
a control module, configured to: control the vehicle to travel at a vehicle speed lower than a preset vehicle speed in a current driving cycle if it is determined that all available driving mileage of the vehicle has been consumed.

In a fourth aspect, the present application provides a mileage-based vehicle control apparatus, including:
a receiving module, configured to receive indication information sent by a vehicle control unit (VCU) of a vehicle, where the indication information is used to indicate information related to available driving mileage of the vehicle; and
a display module, configured to display prompt information on a graphical user interface according to the indication information.

In a fifth aspect, the present application provides a controller device, including: a processor, a memory and a communication interface;
where the memory stores computer-executable instructions; and
the processor executes the computer-executable instructions stored in the memory to implement the mileage-based vehicle control method according to any one of the foregoing aspects.

In a sixth aspect, the present application provides a vehicle, including:
a vehicle body, and a vehicle control unit (VCU) and a digital cockpit head unit (DHU) arranged in the vehicle body;
where the VCU is configured to execute the mileage-based vehicle control method according to any one of the first aspect, and the DHU is configured to execute the mileage-based vehicle control method according to any one of the second aspect.

In a seventh aspect, the present application provides a computer-readable storage medium, having computer-executable instructions stored therein, where the computer-executable instructions, when executed by a processor, are configured to implement the mileage-based vehicle control method according to any one of the foregoing aspects.

In an eighth aspect, the present application provides a computer program product, including a computer program which, when executed by a processor, implements the mileage-based vehicle control method according to any one of the foregoing aspects.

In a ninth aspect, the present application provides a computer program which, when executed by a processor, implements the mileage-based vehicle control method according to any one of the foregoing aspects.

The mileage-based vehicle control method and apparatus, the device and the vehicle provided by the present application can achieve vehicle control based on mileage. After all available driving mileage is consumed, the vehicle can continue traveling at a vehicle speed lower than the preset vehicle speed, thereby avoiding a situation of vehicle startup or traveling failure. Moreover, information related to the available driving mileage of the vehicle can be displayed on the graphical user interface, thereby helping users better manage vehicle usage and improving user experience.

### BRIEF DESCRIPTION OF THE DRAWINGS

The accompanying drawings, which are incorporated in and constitute a part of this specification herein, illustrate embodiments consistent with the present application and serve to explain the principles of the present application together with the specification.
FIG. 1 is a schematic diagram of an application scenario provided by an embodiment of the present application.
FIG. 2 is a schematic flow diagram of Embodiment 1 of a mileage-based vehicle control method provided by the present application.
FIG. 3 is a schematic flow diagram of Embodiment 2 of the mileage-based vehicle control method provided by the present application.
FIG. 4 is a schematic flow diagram of Embodiment 3 of the mileage-based vehicle control method provided by the present application.
FIG. 5 is a schematic flow diagram of Embodiment 4 of the mileage-based vehicle control method provided by the present application.
FIG. 6 is a schematic flow diagram of Embodiment 5 of the mileage-based vehicle control method provided by the present application.
FIG. 7 is a schematic flow diagram of Embodiment 6 of the mileage-based vehicle control method provided by the present application.
FIG. 8 is a schematic structural diagram of Embodiment 1 of a mileage-based vehicle control apparatus provided by the present application.
FIG. 9 is a schematic structural diagram of Embodiment 2 of the mileage-based vehicle control apparatus provided by the present application.
FIG. 10 is a schematic structural diagram of Embodiment 3 of the mileage-based vehicle control apparatus provided by the present application.
FIG. 11 is a schematic structural diagram of a controller device provided by an embodiment of the present application.
FIG. 12 is a schematic structural diagram of a vehicle provided by an embodiment of the present application.

The foregoing drawings show specific embodiments of the present application, which will be described in greater detail hereinafter. These drawings and textual description are not intended to limit the scope of the inventive concept of the present application in any manner, but to explain the concept of the present application to those skilled in the art with reference to specific embodiments.

### DETAILED DESCRIPTION OF THE EMBODIMENTS

Illustrative embodiments will be described in detail herein, instances of which are illustrated in the accompanying drawings. When the following description refers to the accompanying drawings, the same reference numerals in different drawings represent the same or similar elements unless otherwise indicated. The implementations described in the following illustrative embodiments do not represent all implementations consistent with the present application. Rather, they are merely instances of apparatuses and methods consistent with some aspects of the present application as detailed in the appended claims.

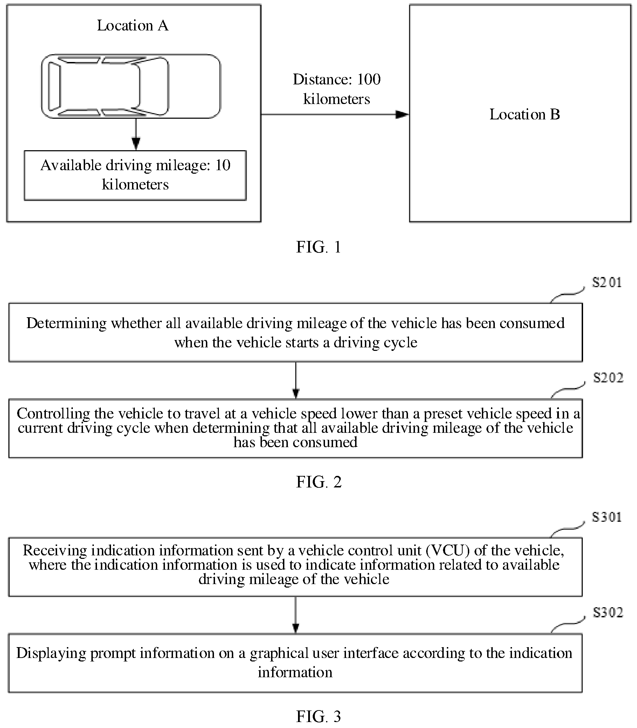

FIG. 1 is a schematic diagram of an application scenario provided by an embodiment of the present application. Referring to FIG. 1, when a user prepares to travel by vehicle, the user may check available driving mileage of the vehicle and purchase mileage in a timely manner if the available driving mileage is insufficient to complete a current trip.

For example, the user prepares to travel from location A to location B with a distance of 100 kilometers (km) by vehicle. After checking the available driving mileage of the vehicle, the user finds that only 10 km of available driving mileage remains, and the user may purchase mileage in a timely manner to complete the trip.

In the related art, vehicle-battery separation can be adopted to reduce users' vehicle purchase burdens. Users do not need to purchase batteries when buying new energy vehicles and only need to rent the batteries of the new energy vehicles. However, in the above manner, batteries will be locked upon expiration of a battery rental term, thereby rendering users unable to use the vehicles and resulting in poor user experience.

In view of the above problem, the inventor finds during research on users' inability to use the vehicle due to battery locking that battery locking during a vehicle traveling process not only prevents vehicle startup or traveling but also may seriously endanger driving safety. Accordingly, the inventor considers whether it is possible to check the available driving mileage of the vehicle through a controller, thereby implementing vehicle control. Based on this, through multiple tests, the inventor finds that the vehicle control can be implemented based on mileage: when the vehicle starts and enters a driving cycle, the available driving mileage of the vehicle can be checked, and if it is determined that all available driving mileage of the vehicle has been consumed, the vehicle can be controlled to travel at a vehicle speed lower than a preset speed in a current driving cycle. Therefore, the present application provides a mileage-based vehicle control method, which can enable the vehicle to continue traveling at a vehicle speed lower than a preset vehicle speed after all available driving mileage is consumed, so as to improve user experience.

The technical solutions shown in the present application will be described in detail below through specific embodiments. It should be noted that several embodiments below may exist independently or in combination, and the same or similar content will not be repeatedly described in different embodiments.

FIG. 2 is a schematic flow diagram of Embodiment 1 of a mileage-based vehicle control method provided by the present application. Referring to FIG. 2, the method is applied to a vehicle control unit (VCU) of a vehicle, and may include the following.

S201: Determining whether all available driving mileage of the vehicle has been consumed when the vehicle starts a driving cycle.

In this step, the vehicle control unit (Vehicle Control Unit, VCU) may detect the available driving mileage of the vehicle when the vehicle starts the driving cycle, so as to determine whether all available driving mileage of the vehicle has been consumed.

The VCU is an important component in a control system of a new energy vehicle, and its function is to control various functions and systems of the vehicle to ensure vehicle safety and performance.

Optionally, the driving cycle may be confirmed according to adjacent power-on time and power-off time of the vehicle. For example, the power-on time of the vehicle may be taken as start time of a current driving cycle, and the power-off time of the vehicle adjacent to the power-on time may be taken as end time of the current driving cycle.

The power-on time of the vehicle may refer to vehicle startup time or the time when a battery starts to supply power, and the power-off time of the vehicle may refer to vehicle shutdown time or the time when the battery stops supplying power.

Optionally, the driving cycle may be determined according to a vehicle usage mode. For example, the time when the vehicle enters a driving mode (driving mode) may be taken as the start time of the current driving cycle, and the time when the vehicle exits the driving mode may be taken as the end time of the current driving cycle.

The time when the vehicle enters the driving mode may refer to the time when the vehicle shifts to Drive (D) or Reverse (R), and the time when the vehicle exits the driving mode may refer to the time when the vehicle shifts to Park (P).

Optionally, when the VCU determines the available driving mileage of the vehicle, the available driving mileage may include the following two cases.

Case 1: User-purchased driving mileage, and free available mileage corresponding to a battery charge level greater than a preset charge level.

Optionally, during a consumption process of available driving mileage, a mileage consumption sequence may be as follows: free available mileage is consumed first, and user-purchased driving mileage is consumed thereafter. After all free available mileage is consumed, the user may continue to consume the purchased driving mileage.

The user-purchased driving mileage refers to driving mileage corresponding to driving mileage product(s) or service(s) purchased by the user. For example, the user may purchase Driving Mileage Product 1 including 500 km of driving mileage.

Optionally, the driving mileage products or services may take various forms.

For example, Driving Mileage Product 1 may include 500 km of driving mileage with a service term of 1 day; and Driving Mileage Product 2 may include 500 km of driving mileage with a service term of 7 days.

For another example, Driving Mileage Product 3 may include consecutive 7-day driving mileage with daily mileage of 200 km; and Driving Mileage Product 4 may include consecutive 30-day driving mileage with daily mileage of 50 km.

Optionally, user-purchased driving mileage product(s) or service(s) may include service term(s). Therefore, the available driving mileage determined upon each startup of the driving cycle excludes expired purchased mileage.

Free mileage may be determined according to a current battery charge level and a preset battery charge level, where the preset battery charge level may be preset according to actual requirements. For example, the preset battery charge level may be 90% of the fully charged battery capacity. The free mileage may include the following.

If the battery is fully charged, that is, the battery charge level is 100%, and the preset battery charge level is 90%, since the battery charge level of 100% is greater than the preset battery charge level of 90%, the free mileage is mileage traveled by the vehicle as the charge level drops from 100% to 90%. For example, as the charge level drops from 100% to 90%, the mileage traveled by the vehicle is 100 km, and then the free mileage is 100 km.

If the battery is not fully charged but the battery charge level is greater than the preset battery charge level, the free mileage is mileage traveled by the vehicle as the charge level of the battery not fully charged drops to the preset battery charge level. For example, if the battery is not fully charged and the charge level is 95%, but the battery charge level of 95% is greater than the preset battery charge level of 90%, the free mileage is mileage traveled by the vehicle as the charge level drops from 95% to 90%. For example, as the charge level drops from 95% to 90%, the mileage traveled by the vehicle is 50 km, and then the free mileage is 50 km.

If the battery is not fully charged and the battery charge level is less than or equal to the preset battery charge level, the free mileage is 0.

For example, the user may purchase Driving Mileage Product 1 including 500 km of driving mileage with a service term from May 1, 2024 to May 31, 2024. If the user does not consume Driving Mileage Product 1 before May 31, 2024, the available driving mileage determined in the driving cycle started after May 31, 2024 excludes Driving Mileage Product 1. Further, if the battery is fully charged to 100% upon startup of the driving cycle on June 1, 2024, the available driving mileage of the vehicle only includes the free mileage of 100 km.

For another example, the user may purchase Driving Mileage Product 1 including 500 km of driving mileage with a service term from May 1, 2024 to May 31, 2024. If the user only consumes 300 km before May 31, 2024, leaving 200 km unconsumed in Driving Mileage Product 1, the available driving mileage determined in the driving cycle started after May 31, 2024 excludes the unconsumed 200 km in Driving Mileage Product 1. Further, if the battery is fully charged to 100% upon startup of the driving cycle on June 1, 2024, the available driving mileage of the vehicle only includes the free mileage of 100 km.

Case 2: Unexpired user-purchased driving mileage, and the free available mileage corresponding to the battery charge level greater than the preset charge level.

For example, the user may purchase Driving Mileage Product 1 including 500 km of driving mileage with a service term from May 1, 2024 to May 31, 2024. If the user only consumes 300 km before May 15, 2024, leaving 200 km unconsumed in Driving Mileage Product 1, the available driving mileage determined in the driving cycle started after May 15, 2024 includes the unconsumed 200 km in Driving Mileage Product 1. Further, if the battery is fully charged to 100% upon startup of the driving cycle on May 16, 2024, the available driving mileage of the vehicle includes the free mileage of 100 km and the unconsumed 200 km in Driving Mileage Product 1.

For example, the VCU may detect the available driving mileage of the vehicle when the vehicle starts the driving cycle and determine that all available driving mileage of the vehicle has been consumed.

S202: Controlling the vehicle to travel at a vehicle speed lower than a preset vehicle speed in a current driving cycle when determining that all available driving mileage of the vehicle has been consumed.

In this step, after determining that all available driving mileage of the vehicle has been consumed, the VCU may adjust vehicle power output to control the vehicle to travel at the vehicle speed lower than the preset vehicle speed in the current driving cycle.

The preset vehicle speed refers to a target speed set for the vehicle under a specific condition, which may be preset by a vehicle manufacturer or automatically determined by the VCU after all available driving mileage is consumed. For example, the preset vehicle speed may be 40 kilometers per hour (km/h), which is preset by the vehicle manufacturer.

For example, if the VCU determines that all available driving mileage of the vehicle has been consumed, the vehicle is controlled to travel at a vehicle speed of less than 40 km/h in the current driving cycle.

In the embodiment of the present application, the VCU may detect the available driving mileage of the vehicle and determine whether all available driving mileage of the vehicle has been consumed when the vehicle starts the driving cycle. If it is determined that all available driving mileage of the vehicle has been consumed, the VCU controls the vehicle to travel at the vehicle speed lower than the preset vehicle speed in the current driving cycle. In the above process, vehicle control may be achieved based on mileage. After all available driving mileage is consumed, the vehicle can continue traveling at a vehicle speed lower than the preset vehicle speed, thereby avoiding vehicle startup or traveling failure, and improving user experience.

FIG. 3 is a schematic flow diagram of Embodiment 2 of the mileage-based vehicle control method provided by the present application. Referring to FIG. 3, the method is applied to a digital cockpit head unit (DHU) of a vehicle, and may include the following.

S301: Receiving indication information sent by a vehicle control unit (VCU) of the vehicle, where the indication information is used to indicate information related to available driving mileage of the vehicle.

In this step, the digital cockpit head unit (Digital Cockpit Head Unit, DHU) may receive indication information sent by the VCU, which may generally include information related to the available driving mileage of the vehicle, and the related information may include a battery charge level, full consumption of available driving mileage, remaining available driving mileage, overdrawn driving mileage, and the like.

The DHU generally includes functions of displaying mileage, driving range state and reminders, and the like. These functions are generally implemented via an instrument cluster display, and the DHU is responsible for controlling and managing such display functions.

For example, when the vehicle starts the driving cycle, the DHU may receive the indication information sent by the VCU, where the indication information is used to indicate full consumption of available driving mileage of the vehicle in a previous driving cycle and overdrawn driving mileage of the vehicle of 100 km.

S302: Displaying prompt information on a graphical user interface according to the indication information.

In this step, the DHU may display prompt information on a central display controlled and managed by the DHU according to the received indication information to prompt the information related to the available driving mileage of the vehicle.

For example, the DHU may display full consumption of available driving mileage of the vehicle and overdrawn driving mileage of the vehicle of 100 km on the central display according to the received indication information.

In the embodiment of the present application, the DHU receives the indication information sent by the VCU of the vehicle, where the indication information is used to indicate information related to the available driving mileage of the vehicle, and displays prompt information on the graphical user interface according to the indication information. By displaying the information related to the available driving mileage of the vehicle on the graphical user interface, the user can conveniently learn the current available driving mileage of the vehicle and make corresponding decision(s) based on the available mileage. Such timely and intuitive information display can help the user better manage vehicle usage, thereby improving driving efficiency and safety, and further enhancing user experience.

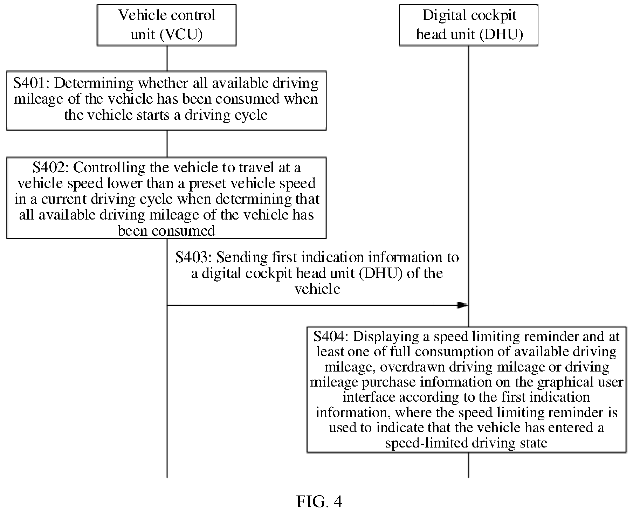

Based on the embodiments shown in FIG. 2 and FIG. 3, the above mileage-based vehicle control method will be described in further detail below with reference to FIG. 4.

FIG. 4 is a schematic flow diagram of Embodiment 3 of the mileage-based vehicle control method provided by the present application. Referring to FIG. 4, the method may include the following.

S401: Determining whether all available driving mileage of the vehicle has been consumed when the vehicle starts a driving cycle.

For example, the VCU may detect the available driving mileage of the vehicle when the vehicle starts the driving cycle and determine that all available driving mileage of the vehicle has been consumed.

S402: Controlling the vehicle to travel at a vehicle speed lower than a preset vehicle speed in a current driving cycle when determining that all available driving mileage of the vehicle has been consumed.

For example, if the VCU determines that all available driving mileage of the vehicle has been consumed, the vehicle is controlled to travel at a vehicle speed of less than 40 km/h in the current driving cycle.

S403: Sending first indication information to a digital cockpit head unit (DHU) of the vehicle.

In this step, the VCU may send first indication information to the DHU of the vehicle, where the first indication information is used to indicate full consumption of available driving mileage of the vehicle in a previous driving cycle and/or overdrawn driving mileage of the vehicle.

The overdrawn driving mileage refers to mileage traveled by the vehicle after all available driving mileage of the vehicle is consumed in the previous driving cycle without speed limitation on the vehicle.

Optionally, overdrawable mileage for the user may be determined according to the user's credit rating, vehicle type and value, a vehicle usage environment or purchased driving mileage. If the user has overdrawn driving mileage in the previous driving cycle, speed limitation is performed on the vehicle upon startup of the current driving cycle. For example, the overdrawable mileage for the user may be determined as 100 km according to the user's credit rating. If the user has 50 km of overdrawn driving mileage in the previous driving cycle, speed limitation is performed on the vehicle upon startup of the current driving cycle, and the user cannot continue to consume the remaining 50 km of overdrawable mileage in the current driving cycle.

For example, the VCU may send first indication information to the DHU of the vehicle, where the first indication information is used to indicate full consumption of available driving mileage of the vehicle in a previous driving cycle and overdrawn driving mileage of the vehicle of 100 km.

S404: Displaying a speed limiting reminder and at least one of full consumption of available driving mileage, overdrawn driving mileage or driving mileage purchase information on the graphical user interface according to the first indication information, where the speed limiting reminder is used to indicate that the vehicle has entered a speed-limited driving state.

In this step, the DHU may receive the first indication information sent by the VCU of the vehicle, where the first indication information is used to indicate full consumption of available driving mileage of the vehicle in a previous driving cycle and/or overdrawn driving mileage of the vehicle. The DHU may display the speed limiting reminder and at least one of full consumption of available driving mileage, overdrawn driving mileage or driving mileage purchase information on the graphical user interface according to the first indication information.

Optionally, the speed limiting reminder may be displayed on the graphical user interface in various forms, including but not limited to warning icons, pop-up reminders, text prompts, and the like.

For example, a warning icon may be displayed at a corner or prominent position of the graphical user interface to remind a driver that the vehicle is currently in a speed-limited state; or a notification window may pop up on the graphical user interface when the vehicle starts to enter the speed-limited state to display text information of the speed limiting reminder accompanied by a warning icon or color change to enhance visibility; or text information of the speed limiting reminder may be displayed at a fixed position on the graphical user interface, such as "current vehicle speed is limited, please drive with caution".

The driving mileage purchase information may include any one or any combination of the following three cases.

Case 1: The driving mileage purchase information may be driving mileage product(s) or service(s) that the user can directly purchase on the graphical user interface.

Case 2: The driving mileage purchase information may also be a QR code or link leading to a purchase platform, and the user can acquire driving mileage product(s) or service(s) by scanning the QR code or clicking the link.

Case 3: The driving mileage purchase information may also be information prompting the user to purchase driving mileage product(s) or service(s).

For example, the DHU may receive first indication information sent by the VCU of the vehicle, where the first indication information is used to indicate full consumption of available driving mileage of the vehicle in a previous driving cycle and overdrawn driving mileage of the vehicle of 100 km. The DHU may display a speed limiting reminder, as well as full consumption of available driving mileage, overdrawn driving mileage of 100 km, and a link for driving mileage purchase information on the graphical user interface according to the first indication information. Optionally, the speed limiting reminder may be issued via a warning icon.

In the embodiment of the present application, after determining that all available driving mileage of the vehicle has been consumed, the VCU controls the vehicle to travel at a vehicle speed lower than the preset vehicle speed in the current driving cycle, and sends the first indication information to the DHU of the vehicle. The DHU may receive the first indication information sent by the VCU and display the speed limiting reminder and at least one of full consumption of available driving mileage, overdrawn driving mileage or driving mileage purchase information on the graphical user interface according to the first indication information. In the above manner, the user can clearly learn the speed-limited state and available driving mileage of the vehicle based on the prompt information displayed on the graphical user interface, so as to drive the vehicle more safely and take appropriate countermeasures, thereby improving user experience.

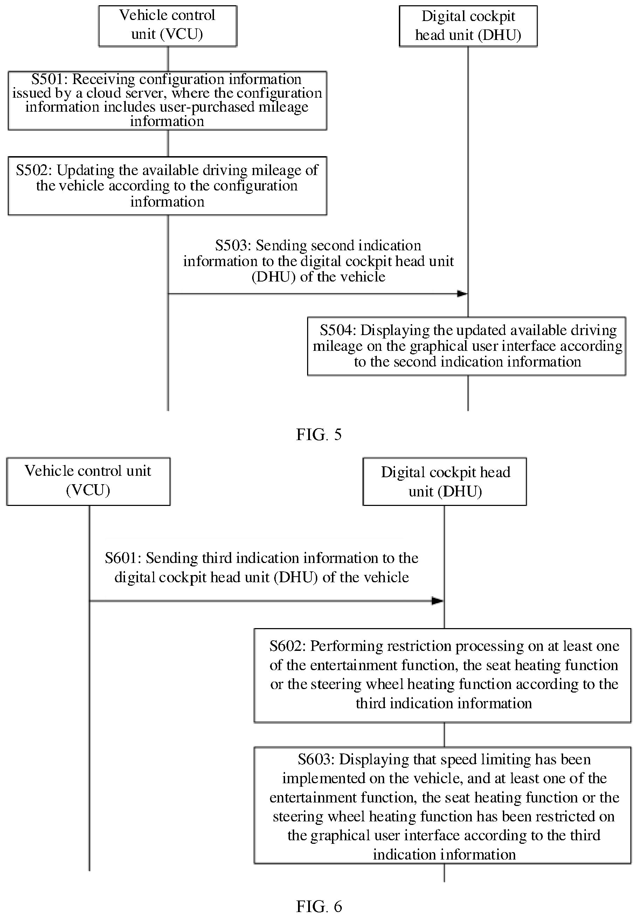

FIG. 5 is a schematic flow diagram of Embodiment 4 of the mileage-based vehicle control method provided by the present application. Referring to FIG. 5, on the basis of the foregoing embodiments, the method further includes the following.

S501: Receiving configuration information issued by a cloud server, where the configuration information includes user-purchased mileage information.

In this step, the VCU may establish a communication connection with the cloud server, receive the configuration information issued by the cloud server, parse the configuration information, and extract user-purchased mileage information included in the configuration information.

Optionally, the configuration information may be issued in any one of the following manners.

Manner 1: Existing signal field(s) are extended. In a specific implementation, a spare field available for carrying configuration information may be identified in a current vehicle signal, or a new empty field may be added to the current vehicle signal. After encoding the configuration information, it may be added to the spare field of the current vehicle signal or the newly added empty field in the current vehicle signal. After receiving the signal, the VCU parses the extended existing signal field to obtain the configuration information.

Manner 2: A new transmission signal is set. In a specific implementation, a new transmission signal dedicated to carrying the configuration information may be designed between the VCU of the vehicle and the cloud server. After encoding the configuration information, it may be added to the new transmission signal. After receiving the new transmission signal, the VCU parses it to obtain the configuration information.

Optionally, the mileage information may refer to user-purchased mileage. For example, the mileage information may be the user-purchased mileage of 500 km.

In another optional implementation, if the purchased driving mileage product or service has a service term, the mileage information further includes a remaining service term of the user-purchased mileage information, where the mileage information and the remaining service term of the mileage information may be issued via the configuration information in any one of the following manners.

Manner 1: When the vehicle powers on to start the driving cycle, the cloud server may issue configuration information to the VCU, and the configuration information includes mileage information and the remaining service term of the mileage information. For example, the user may purchase Driving Mileage Product 1 including 500 km of mileage with a service term from May 1, 2024 to May 31, 2024. If the vehicle powers on to start the driving cycle on May 15, 2024, the cloud server may issue the configuration information to the VCU, where the configuration information includes user-purchased 500 km of mileage and the remaining service term of the 500 km mileage from May 15, 2024 to May 31, 2024.

Manner 2: In the current driving cycle, the cloud server may issue configuration information to the VCU according to a preset period, where the configuration information includes mileage information and the remaining service term of the mileage information.

Optionally, the preset period may be preset according to actual requirements. For example, the preset period may be 1 hour, 30 minutes or 15 minutes.

For example, Driving Mileage Product 2 includes 500 km of mileage with a service term from 8:00 to 20:00 on May 1, 2024. If the current driving cycle starts at 8:00 on May 1, 2024, the cloud server may issue configuration information to the VCU every 30 minutes in the current driving cycle, where Configuration Information 1 issued at 8:00 includes: mileage of 500 km and a remaining service term of the 500 km mileage from 8:00 to 20:00 on May 1, 2024; and Configuration Information 2 issued at 8:30 includes: mileage of 400 km and a remaining service term of the 400 km mileage from 8:30 to 20:00 on May 1, 2024.

Manner 3: In the current driving cycle, the cloud server may issue configuration information to the VCU when the service term of the driving mileage product or service is less than preset time, where the configuration information includes mileage information and the remaining service term of the mileage information.

Optionally, the preset time may be set according to actual requirements. For example, the preset time may be that the reminder may be triggered when one hour remains until the expiration of the service term of the driving mileage product or service.

For example, Driving Mileage Product 2 includes 500 km of mileage with a service term from 8:00 to 20:00 on May 1, 2024. If the current driving cycle starts at 8:00 on May 1, 2024, the cloud server may issue configuration information to the VCU at 19:00 in the current driving cycle, where the configuration information may include: mileage of 50 km and a remaining service term of the 50 km mileage from 19:00 to 20:00 on May 1, 2024.

For example, a new transmission signal may be designed between the VCU of the vehicle and the cloud server, and the VCU may receive configuration information issued by the cloud server via the new transmission signal, parse the configuration information, and extract user-purchased mileage information, where the user-purchased mileage may be 500 km.

S502: Updating the available driving mileage of the vehicle according to the configuration information.

For example, after the previous driving cycle ends, the VCU may receive configuration information issued by the cloud server, where the configuration information includes user-purchased mileage of 500 km. If all available driving mileage is consumed and the overdrawn driving mileage is 100 km after the previous driving cycle ends, the available driving mileage of the vehicle may be updated according to the configuration information, and an updated result may be the available driving mileage of 400 km.

S503: Sending second indication information to the digital cockpit head unit (DHU) of the vehicle.

In this step, the VCU may send second indication information to the DHU of the vehicle, where the second indication information is used to indicate updated available driving mileage.

For example, the VCU may send second indication information to the DHU of the vehicle, where the second indication information is used to indicate that the updated available driving mileage is 400 km.

S504: Displaying the updated available driving mileage on the graphical user interface according to the second indication information.

In this step, the DHU may receive second indication information sent by the VCU of the vehicle, where the second indication information is used to indicate the updated available driving mileage. The DHU may display the updated available driving mileage on the graphical user interface according to the second indication information.

For example, the DHU may receive second indication information sent by the VCU of the vehicle, where the second indication information is used to indicate that the updated available driving mileage is 400 km. The DHU may display the updated available driving mileage of 400 km on the graphical user interface according to the second indication information.

In the embodiment of the present application, the VCU may receive configuration information issued by the cloud server, where the configuration information includes user-purchased mileage information, update the available driving mileage of the vehicle according to the configuration information, and send second indication information to the DHU of the vehicle. The DHU may receive the second indication information sent by the VCU and display the updated available driving mileage on the graphical user interface according to the second indication information. In the above manner, the user may better arrange a trip based on the updated available driving mileage displayed on the graphical user interface, thereby ensuring no inconvenience or delay caused by insufficient available driving mileage, and improving user experience and driving experience.

Based on the embodiments shown in FIG. 2 and FIG. 3 or FIG. 4, the above mileage-based vehicle control method will be described in further detail below with reference to FIG. 6.

FIG. 6 is a schematic flow diagram of Embodiment 5 of the mileage-based vehicle control method provided by the present application. Referring to FIG. 6, the method further includes the following.

S601: Sending third indication information to the digital cockpit head unit (DHU) of the vehicle.

In this step, the VCU may send third indication information to the DHU of the vehicle, where the third indication information is used to indicate that speed limiting has been implemented on the vehicle, and to indicate the DHU to perform restriction control on at least one of an entertainment function, a seat heating function or a steering wheel heating function.

The entertainment function may include ambient light adjustment, music playback, video playback, and the like. For example, the vehicle manufacturer has activated exclusive member music access rights for the vehicle, and once all available driving mileage is consumed, the DHU restricts the entertainment function by restricting the exclusive member music access rights, so that the vehicle cannot play member music activated by the manufacturer.

For example, the VCU may send third indication information to the DHU of the vehicle, where the third indication information is used to indicate that speed limiting has been implemented on the vehicle, and to indicate the DHU to perform restriction control on the seat heating function. Speed limitation refers to controlling the vehicle to travel at a vehicle speed of less than 40 km/h.

S602: Performing restriction processing on at least one of the entertainment function, the seat heating function or the steering wheel heating function according to the third indication information.

In this step, the DHU may receive third indication information sent by the VCU of the vehicle, where the third indication information is used to indicate that speed limiting has been implemented on the vehicle, and to indicate the DHU to perform restriction control on at least one of the entertainment function, the seat heating function or the steering wheel heating function. The DHU may perform restriction processing on at least one of the entertainment function, the seat heating function or the steering wheel heating function according to the third indication information.

For example, the DHU may receive third indication information sent by the VCU of the vehicle, where the third indication information is used to indicate the DHU to perform restriction control on the seat heating function. The DHU may perform restriction processing on the seat heating function according to the third indication information.

S603: Displaying that speed limiting has been implemented on the vehicle, and at least one of the entertainment function, the seat heating function or the steering wheel heating function has been restricted on the graphical user interface according to the third indication information.

For example, the DHU may display that speed limiting has been implemented on the vehicle, and the seat heating function has been restricted on the graphical user interface according to the third indication information. In a specific implementation, two warning icons may be displayed at a corner of the graphical user interface to remind the driver that the vehicle is currently in a speed-limited state and that the seat heating function has been restricted.

In the embodiment of the present application, when the vehicle starts the driving cycle, the VCU may send third indication information to the DHU, where the third indication information is used to indicate that speed limiting has been implemented on the vehicle, and to indicate the DHU to perform restriction control on at least one of the entertainment function, the seat heating function or the steering wheel heating function. The DHU may display that speed limiting has been implemented on the vehicle, and at least one of the entertainment function, the seat heating function or the steering wheel heating function has been restricted on the graphical user interface according to the received third indication information. In the above process, the content displayed on the graphical user interface may remind the user that the related function(s) and speed of the vehicle are currently restricted, thereby helping the user better understand the vehicle state and being conducive to improving driving safety and comfort.

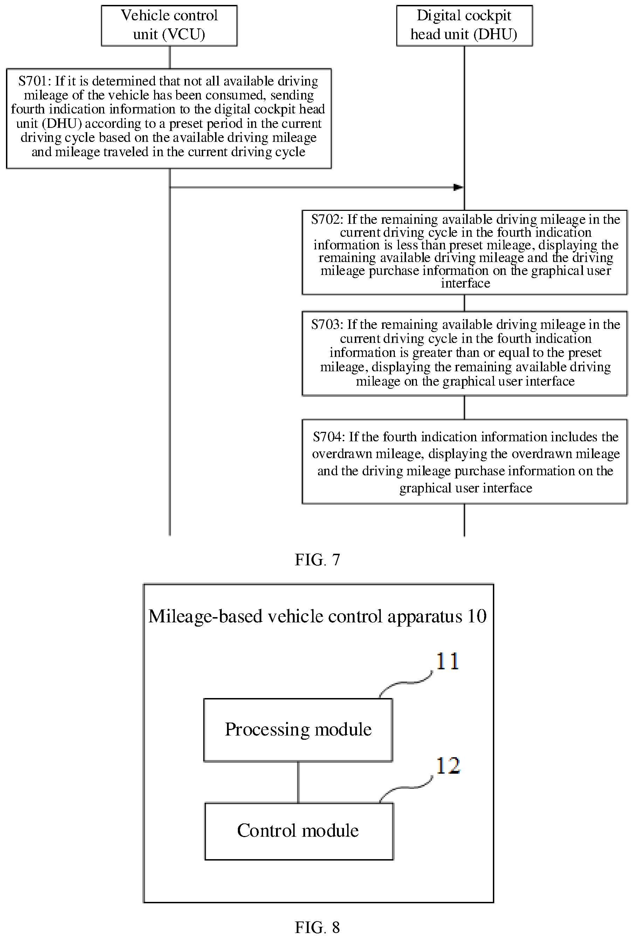

Based on the embodiments shown in FIG. 2 and FIG. 3 or FIG. 4, the above mileage-based vehicle control method will be described in further detail below with reference to FIG. 7.

FIG. 7 is a schematic flow diagram of Embodiment 6 of the mileage-based vehicle control method provided by the present application. Referring to FIG. 7, the method further includes the following.

S701: If it is determined that not all available driving mileage of the vehicle has been consumed, sending fourth indication information to the digital cockpit head unit (DHU) according to a preset period in the current driving cycle based on the available driving mileage and mileage traveled in the current driving cycle.

In this step, if the VCU determines that not all available driving mileage of the vehicle has been consumed, it may send fourth indication information to the DHU according to the preset period in the current driving cycle based on the continuously decreasing available driving mileage and continuously increasing mileage traveled in the current driving cycle, where the fourth indication information is used to indicate remaining available driving mileage or overdrawn mileage.

Optionally, the preset period may be preset according to actual requirements. For example, the preset period may be 1 minute, 10 minutes or 1 hour.

It should be noted that if the preset period is extremely short, such as 1 millisecond, the VCU may be considered to continuously send fourth indication information to the DHU, where the fourth indication information is used to indicate continuously changing remaining available driving mileage or overdrawn mileage.

For example, if the preset period is 10 minutes, available driving mileage will continue to decrease and traveled mileage will continue to increase as the available driving mileage is continuously consumed during the traveling process of the vehicle in the current driving cycle. The VCU may send fourth indication information to the DHU every 10 minutes according to the available driving mileage and the mileage traveled in the current driving cycle.

S702: If the remaining available driving mileage in the current driving cycle in the fourth indication information is less than preset mileage, displaying the remaining available driving mileage and the driving mileage purchase information on the graphical user interface.

In this step, the DHU may receive fourth indication information sent by the VCU of the vehicle, where the fourth indication information is used to indicate remaining available driving mileage or overdrawn mileage. If it is determined that the remaining available driving mileage in the current driving cycle is less than the preset mileage according to the fourth indication information, the remaining available driving mileage and driving mileage purchase information may be displayed on the graphical user interface.

Optionally, the preset mileage may be preset according to actual requirements. For example, the preset mileage may be 10 km, 20 km or 30 km.

For example, if the preset mileage is 20 km and the remaining available driving mileage of the vehicle in the current driving cycle is 15 km, the remaining available driving mileage of 15 km and a link for driving mileage purchase information may be displayed on the graphical user interface.

S703: If the remaining available driving mileage in the current driving cycle in the fourth indication information is greater than or equal to the preset mileage, displaying the remaining available driving mileage on the graphical user interface.

In this step, the DHU may receive fourth indication information sent by the VCU of the vehicle. If it is determined that the remaining available driving mileage in the current driving cycle is greater than or equal to the preset mileage according to the fourth indication information, the remaining available driving mileage may be displayed on the graphical user interface.

For example, if the preset mileage is 20 km and the remaining available driving mileage of the vehicle in the current driving cycle is 25 km, the remaining available driving mileage of 25 km may be displayed on the graphical user interface in real time.

S704: If the fourth indication information includes the overdrawn mileage, displaying the overdrawn mileage and the driving mileage purchase information on the graphical user interface.

In this step, the DHU may receive fourth indication information sent by the VCU of the vehicle. If it is determined that overdrawn mileage exists in the current driving cycle according to the fourth indication information, the overdrawn mileage and driving mileage purchase information may be displayed on the graphical user interface.

For example, the DHU may receive fourth indication information sent by the VCU of the vehicle, where the fourth indication information includes overdrawn mileage of 100 km, and the overdrawn mileage of 100 km and a link for driving mileage purchase information may be displayed on the graphical user interface.

In the embodiment of the present application, if the VCU determines that not all available driving mileage of the vehicle has been consumed, it may send fourth indication information to the DHU according to the preset period in the current driving cycle based on the available driving mileage and mileage traveled in the current driving cycle. The DHU may display the remaining available driving mileage and driving mileage purchase information; or display the available driving mileage; or display the overdrawn mileage and driving mileage purchase information on the graphical user interface according to the received fourth indication information. In the above process, information related to available driving mileage in the current driving cycle may be directly acquired via the DHU, thereby helping the user better arrange a trip and formulate mileage purchase strategies, enhancing the user's control over the vehicle and improving driving experience.

FIG. 8 is a schematic structural diagram of Embodiment 1 of a mileage-based vehicle control apparatus provided by the present application. Referring to FIG. 8, the mileage-based vehicle control apparatus 10 includes the following.

A processing module 11 is configured to determine whether all available driving mileage of the vehicle has been consumed when the vehicle starts a driving cycle.

A control module 12 is configured to: if it is determined that all available driving mileage of the vehicle has been consumed, control the vehicle to travel at a vehicle speed lower than a preset vehicle speed in a current driving cycle.

The mileage-based vehicle control apparatus provided by the embodiment of the present application may execute the technical solutions shown in the foregoing method embodiments, and the implementation principles and beneficial effects thereof are similar, which will not be repeated herein.

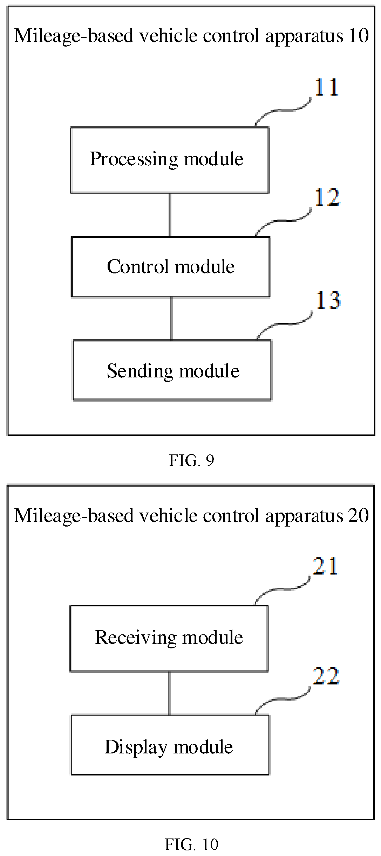

FIG. 9 is a schematic structural diagram of Embodiment 2 of the mileage-based vehicle control apparatus provided by the present application. On the basis of the embodiment shown in FIG. 8, referring to FIG. 9, the mileage-based vehicle control apparatus 10 further includes the following.

A sending module 13 is configured to send first indication information to a digital cockpit head unit (DHU) of the vehicle, where the first indication information is used to indicate full consumption of available driving mileage of the vehicle in a previous driving cycle and/or overdrawn driving mileage of the vehicle.

In a possible implementation, the available driving mileage of the vehicle includes:
user-purchased driving mileage, and free available mileage corresponding to a battery charge level greater than a preset charge level; or
unexpired user-purchased driving mileage, and the free available mileage corresponding to the battery charge level greater than the preset charge level.

In a possible implementation, the processing module 11 is further configured to receive configuration information issued by a cloud server, where the configuration information includes user-purchased mileage information; and
the sending module 13 is further configured to update the available driving mileage of the vehicle according to the configuration information, and send second indication information to the digital cockpit head unit (DHU), where the second indication information is used to indicate updated available driving mileage.

In a possible implementation, the sending module 13 is further configured to:
send third indication information to the digital cockpit head unit (DHU) of the vehicle, where the third indication information is used to indicate that speed limiting has been implemented on the vehicle, and to indicate the DHU to perform restriction control on at least one of an entertainment function, a seat heating function or a steering wheel heating function.

In a possible implementation, the sending module 13 is further configured to:
if it is determined that not all available driving mileage of the vehicle has been consumed, send fourth indication information to the digital cockpit head unit (DHU) according to a preset period in the current driving cycle based on the available driving mileage and mileage traveled in the current driving cycle, where the fourth indication information is used to indicate remaining available driving mileage or overdrawn mileage.

The mileage-based vehicle control apparatus provided by the embodiments of the present application may execute the technical solutions shown in the foregoing method embodiments, and the implementation principles and beneficial effects thereof are similar, which will not be repeated herein.

FIG. 10 is a schematic structural diagram of Embodiment 3 of the mileage-based vehicle control apparatus provided by the present application. Referring to FIG. 10, the mileage-based vehicle control apparatus 20 includes the following.

A receiving module 21 is configured to receive indication information sent by a vehicle control unit (VCU) of the vehicle, where the indication information is used to indicate information related to available driving mileage of the vehicle.

A display module 22 is configured to display prompt information on a graphical user interface according to the indication information.

The mileage-based vehicle control apparatus provided by the embodiment of the present application may execute the technical solutions shown in the foregoing method embodiments, and the implementation principles and beneficial effects thereof are similar, which will not be repeated herein.

In a possible implementation, the indication information includes first indication information, and the first indication information is used to indicate full consumption of available driving mileage of the vehicle in a previous driving cycle and/or overdrawn driving mileage of the vehicle; and
correspondingly, the display module 22 is specifically configured to:
display a speed limiting reminder and at least one of full consumption of available driving mileage, overdrawn driving mileage or driving mileage purchase information on the graphical user interface according to the first indication information, where the speed limiting reminder is used to indicate that the vehicle has entered a speed-limited driving state.

In a possible implementation, the indication information includes second indication information, and the second indication information is used to indicate updated available driving mileage; and
correspondingly, the display module 22 is specifically configured to:
display the updated available driving mileage on the graphical user interface according to the second indication information.

In a possible implementation, the indication information includes third indication information, and the third indication information is used to indicate that speed limiting has been implemented on the vehicle, and to indicate the DHU to perform restriction control on at least one of an entertainment function, a seat heating function or a steering wheel heating function;
the receiving module 21 is further configured to:
perform restriction processing on at least one of the entertainment function, the seat heating function or the steering wheel heating function according to the third indication information; and
correspondingly, the display module 22 is specifically configured to:
   display that speed limiting has been implemented on the vehicle, and at least one of the entertainment function, the seat heating function or the steering wheel heating function has been restricted on the graphical user interface according to the third indication information.

In a possible implementation, the indication information includes fourth indication information, and the fourth indication information is used to indicate remaining available driving mileage in a current driving cycle or overdrawn mileage; and
correspondingly, the display module 22 is specifically configured to:
if the remaining available driving mileage in the current driving cycle in the fourth indication information is less than preset mileage, display the remaining available driving mileage and the driving mileage purchase information on the graphical user interface;
if the remaining available driving mileage in the current driving cycle in the fourth indication information is greater than or equal to the preset mileage, display the remaining available driving mileage on the graphical user interface; and
if the fourth indication information includes the overdrawn mileage, display the overdrawn mileage and the driving mileage purchase information on the graphical user interface.

The mileage-based vehicle control apparatus provided by the embodiments of the present application may execute the technical solutions shown in the foregoing method embodiments, and the implementation principles and beneficial effects thereof are similar, which will not be repeated herein.

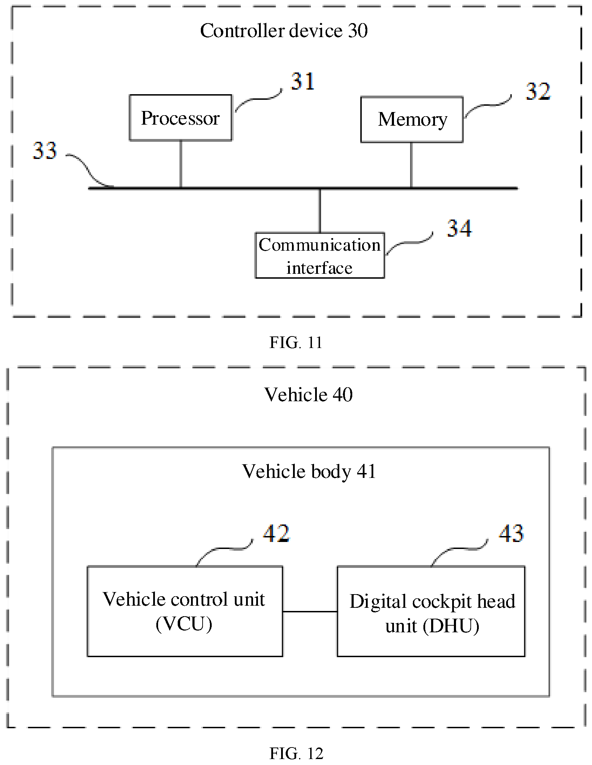

FIG. 11 is a schematic structural diagram of a controller device provided by an embodiment of the present application. Referring to FIG. 11, the controller device 30 may include a processor 31, a memory 32 and a communication interface 34. Illustratively, the processor 31, the memory 32 and the communication interface 34 are connected to one another via a bus 33.

The memory 32 stores computer-executable instructions; and
the processor 31 executes the computer-executable instructions stored in the memory 32 to cause the processor 31 to execute the mileage-based vehicle control method provided by the foregoing method embodiments.

The controller device provided by the embodiment of the present application may be the VCU or DHU in the foregoing method embodiments, and may execute the technical solutions shown in the foregoing method embodiments, implementation principles and beneficial effects are similar, which will not be repeated herein.

FIG. 12 is a schematic structural diagram of a vehicle provided by an embodiment of the present application. Referring to FIG. 12, the vehicle 40 may include: a vehicle body 41, and a vehicle control unit (VCU) 42 and a digital cockpit head unit (DHU) 43 arranged in the vehicle body 41;
where the VCU 42 is configured to execute the technical solutions on the VCU side in any one of the foregoing method embodiments, and the DHU 43 is configured to execute the technical solutions on the DHU side in any one of the foregoing method embodiments.

Correspondingly, an embodiment of the present application provides a computer-readable storage medium, having computer-executable instructions stored therein, where the computer-executable instructions, when executed by a processor, are configured to implement the mileage-based vehicle control method according to the foregoing method embodiments.

Correspondingly, an embodiment of the present application further provides a computer program product, including a computer program which, when executed by a processor, may implement the mileage-based vehicle control method according to the foregoing method embodiments.

Those skilled in the art will readily conceive other implementations of the present application upon consideration of the specification and practice of the present application disclosed herein. The present application is intended to cover any variations, uses or adaptations of the present application, and these variations, uses or adaptations follow the general principles of the present application and include common general knowledge or conventional technical means in the technical field not disclosed by the present application. The specification and embodiments are to be regarded as illustrative only, and the true scope and spirit of the present application are indicated by the following claims. It should be understood that the present application is not limited to the precise structures described above and illustrated in the accompanying drawings, and various modifications and changes may be made without departing from the scope thereof. The scope of the present application is limited solely by the appended claims.

## Claims

1. A mileage-based vehicle control method, applied to a vehicle control unit VCU of a vehicle, and comprising:
determining whether all available driving mileage of the vehicle has been consumed when the vehicle starts a driving cycle; and
controlling the vehicle to travel at a vehicle speed lower than a preset vehicle speed in a current driving cycle when determining that all available driving mileage of the vehicle has been consumed.

2. The method according to claim 1, further comprising:
sending first indication information to a digital cockpit head unit DHU of the vehicle, wherein the first indication information is used to indicate full consumption of available driving mileage of the vehicle in a previous driving cycle and/or overdrawn driving mileage of the vehicle.

3. The method according to claim 1 or 2, wherein the available driving mileage of the vehicle comprises:
user-purchased driving mileage, and free available mileage corresponding to a battery charge level greater than a preset charge level; or
unexpired user-purchased driving mileage, and the free available mileage corresponding to the battery charge level greater than the preset charge level.

4. The method according to any one of claims 1 to 3, further comprising:
receiving configuration information issued by a cloud server, wherein the configuration information comprises user-purchased mileage information; and
updating the available driving mileage of the vehicle according to the configuration information, and sending second indication information to a digital cockpit head unit DHU, wherein the second indication information is used to indicate updated available driving mileage.

5. The method according to any one of claims 1 to 3, further comprising:
sending third indication information to a digital cockpit head unit DHU of the vehicle, wherein the third indication information is used to indicate that speed limiting has been implemented on the vehicle, and to indicate the DHU to perform restriction control on at least one of an entertainment function, a seat heating function or a steering wheel heating function.

6. The method according to any one of claims 1 to 3, further comprising:
when it is determined that not all available driving mileage of the vehicle has been consumed, sending fourth indication information to a digital cockpit head unit DHU according to a preset period in a current driving cycle based on the available driving mileage and mileage traveled in the current driving cycle, wherein the fourth indication information is used to indicate remaining available driving mileage or overdrawn mileage.

7. A mileage-based vehicle control method, applied to a digital cockpit head unit DHU of a vehicle, and comprising:
receiving indication information sent by a vehicle control unit VCU of the vehicle, wherein the indication information is used to indicate information related to available driving mileage of the vehicle; and
displaying prompt information on a graphical user interface according to the indication information.

8. The method according to claim 7, wherein the indication information comprises first indication information, and the first indication information is used to indicate full consumption of available driving mileage of the vehicle in a previous driving cycle and/or overdrawn driving mileage of the vehicle; and
correspondingly, the displaying the prompt information on the graphical user interface according to the indication information, comprises:
displaying a speed limiting reminder and at least one of full consumption of available driving mileage, overdrawn driving mileage or driving mileage purchase information on the graphical user interface according to the first indication information, wherein the speed limiting reminder is used to indicate that the vehicle has entered a speed-limited driving state.

9. The method according to claim 7, wherein the indication information comprises second indication information, and the second indication information is used to indicate updated available driving mileage; and
correspondingly, the displaying the prompt information on the graphical user interface according to the indication information, comprises:
displaying the updated available driving mileage on the graphical user interface according to the second indication information.

10. The method according to claim 7, wherein the indication information comprises third indication information, and the third indication information is used to indicate that speed limiting has been implemented on the vehicle, and to indicate the DHU to perform restriction control on at least one of an entertainment function, a seat heating function or a steering wheel heating function;
the method further comprises:
performing restriction processing on at least one of the entertainment function, the seat heating function or the steering wheel heating function according to the third indication information; and
correspondingly, the displaying the prompt information on the graphical user interface according to the indication information, comprises:
displaying that speed limiting has been implemented on the vehicle, and at least one of the entertainment function, the seat heating function or the steering wheel heating function has been restricted on the graphical user interface according to the third indication information.

11. The method according to claim 7, wherein the indication information comprises fourth indication information, and the fourth indication information is used to indicate remaining available driving mileage in a current driving cycle or overdrawn mileage; and
correspondingly, the displaying the prompt information on the graphical user interface according to the indication information, comprises:
when the remaining available driving mileage in the current driving cycle in the fourth indication information is less than preset mileage, displaying the remaining available driving mileage and driving mileage purchase information on the graphical user interface;
when the remaining available driving mileage in the current driving cycle in the fourth indication information is greater than or equal to the preset mileage, displaying the remaining available driving mileage on the graphical user interface; and
when the fourth indication information comprises the overdrawn mileage, displaying the overdrawn mileage and the driving mileage purchase information on the graphical user interface.

12. A mileage-based vehicle control apparatus, comprising:
a processing module, configured to determine whether all available driving mileage of the vehicle has been consumed when the vehicle starts a driving cycle; and
a control module, configured to: control the vehicle to travel at a vehicle speed lower than a preset vehicle speed in a current driving cycle when determining that all available driving mileage of the vehicle has been consumed.

13. A mileage-based vehicle control apparatus, comprising:
a receiving module, configured to receive indication information sent by a vehicle control unit VCU of a vehicle, wherein the indication information is used to indicate information related to available driving mileage of the vehicle; and
a display module, configured to display prompt information on a graphical user interface according to the indication information.

14. A controller device, comprising: a processor, a memory and a communication interface;
wherein the memory stores computer-executable instructions; and
the processor executes the computer-executable instructions stored in the memory to implement the mileage-based vehicle control method according to any one of claims 1 to 11.

15. A vehicle, comprising:
a vehicle body, and a vehicle control unit VCU and a digital cockpit head unit DHU arranged in the vehicle body;
wherein the VCU is configured to execute the mileage-based vehicle control method according to any one of claims 1 to 6, and the DHU is configured to execute the mileage-based vehicle control method according to any one of claims 7 to 11.

16. A computer-readable storage medium, wherein the computer-readable storage medium stores computer-executable instructions, and the computer-executable instructions, when executed by a processor, are configured to implement the mileage-based vehicle control method according to any one of claims 1 to 11.

17. A computer program product, comprising a computer program which, when executed by a processor, implements the mileage-based vehicle control method according to any one of claims 1 to 11.

18. A computer program, when executed by a processor, the computer program implements the mileage-based vehicle control method according to any one of claims 1 to 11.
